Europäisches Patentamt

European Patent Office

Office européen des brevets

(19)

(11) EP 0 739 909 B1

## (12) FASCICULE DE BREVET EUROPEEN

(45) Date de publication et mention
de la délivrance du brevet:
**18.08.1999 Bulletin 1999/33**

(51) Int Cl.6: **C08F 10/02**, C08F 297/08,
C08F 4/655, C08F 4/22

(21) Numéro de dépôt: **96201016.1**

(22) Date de dépôt: **16.04.1996**

(54) **Polymère d'éthylène et procédés pour son obtention**

Ethylenpolymer und Verfahren zu seinen Herstellung

Ethylene polymer and process for preparing it

(84) Etats contractants désignés:
**AT BE DE ES FI FR GB IT NL PT SE**

(30) Priorité: **28.04.1995 BE 9500397**

(43) Date de publication de la demande:
**30.10.1996 Bulletin 1996/44**

(60) Demande divisionnaire: **98124379.3 / 0 908 474**
**98124380.1 / 0 906 922**

(73) Titulaire: **SOLVAY POLYOLEFINS EUROPE -
BELGIUM (Société Anonyme)
1050 Bruxelles (BE)**

(72) Inventeurs:
• **Breulet, Jacques
1970 Wezembeek-Oppem (BE)**
• **Koch, Benoît
4280 Hannut (BE)**

• **Promel, Michel
1120 Bruxelles (BE)**
• **Bian, Jiang
1200 Bruxelles (BE)**
• **Lhost, Olivier
7000 Mons (BE)**

(74) Mandataire: **Destryker, Elise Martine et al
Solvay Polyolefins Europe-Belgium
(Société Anonyme)
Département de la Propriété Industrielle
310, rue de Ransbeek
1120 Bruxelles (BE)**

(56) Documents cités:
**EP-A- 0 100 843       EP-A- 0 134 427
EP-A- 0 273 284       EP-A- 0 572 003
EP-A- 0 603 935       EP-A- 0 670 337
US-A- 5 260 384**

## Description

La présente invention concerne des polymères d'éthylène présentant une combinaison avantageuse de caractéristiques qui les rend particulièrement adaptés à la mise en oeuvre par extrusion et par extrusion soufflage en vue de la fabrication d'articles (par exemple de tuyaux) présentant d'excellentes propriétés mécaniques et notamment une résistance élevée à la fissuration sous contrainte. L'invention concerne également divers procédés pour l'obtention de ces polymères d'éthylène.

Il est généralement connu que des résines présentant une viscosité élongationnelle élevée (ce qui se traduit par un taux de gonflement élevé) se prêtent particulièrement bien à la mise en oeuvre par extrusion et par extrusion soufflage. Par exemple, le brevet belge BE 840378 (SOLVAY & CIE) décrit des polyéthylènes obtenus par polymérisation dans un seul réacteur en présence d'un solide catalytique qui est préparé en faisant réagir un composé oxygéné organique de magnésium avec un composé oxygéné organique de titane et un composé oxygéné organique de zirconium, et en traitant ensuite le produit de réaction ainsi obtenu avec un halogénure d'aluminium. Les polyéthylènes connus présentent un taux de gonflement élevé. Toutefois, leurs propriétés mécaniques sont telles que la résistance à la fissuration sous contrainte des tuyaux extrudés à partir de ces polyéthylènes est faible.

Par ailleurs, des polyéthylènes de propriétés mécaniques améliorées et en particulier de résistance élevée à la fissuration sous contrainte, sont connus. Par exemple, la demande de brevet EP 603935 (SOLVAY) divulgue des polymères d'éthylène obtenus par polymérisation dans au moins deux réacteurs en série en présence d'un catalyseur au titane. Les polymères d'éthylène ainsi obtenus présentent de bonnes propriétés mécaniques (résistance élevée à la fissuration sous contrainte). Cependant, les polymères d'éthylène présentent un faible taux de gonflement.

La présente invention vise à remédier aux inconvénients précités en fournissant un polymère d'éthylène nouveau présentant à la fois un taux de gonflement élevé et une résistance élevée à la fissuration sous contrainte, qui convient particulièrement bien à la mise en oeuvre par extrusion et par extrusion soufflage.

En conséquence, l'invention concerne un polymère d'éthylène présentant un taux de gonflement ($T_G$) d'au moins 1,4, une résistance à la fissuration sous contrainte (ESCR) d'au moins 55 h et un indice de fluidité ($MI_5$) d'au moins 0,2 g/10 min.

Une des caractéristiques essentielles du polymère d'éthylène selon l'invention réside donc dans la combinaison d'un taux de gonflement élevé avec une résistance élevée à la fissuration sous contrainte.

Le taux de gonflement du polymère d'éthylène selon l'invention est mesuré en extrudant, à 190°C et à un gradient de vitesse de 100 s⁻¹, le polymère d'éthylène au travers d'une filière d'une longueur de 30 mm et d'un diamètre de 2 mm et à une vitesse d'extrusion constante, et en mesurant le déplacement du piston nécessaire pour extruder une longueur de jonc de 70 mm. Le taux de gonflement est défini par la relation $T_G = 0{,}5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D1238 (1986).

La résistance à la fissuration sous contrainte du polymère d'éthylène est mesurée selon le mode opératoire suivant. Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensioactive comprenant 3 ml de nonylphénoxy-poly(éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

Aux fins de la présente invention, on entend désigner par "polymères d'éthylène" les homopolymères d'éthylène ainsi que les copolymères d'éthylène avec au moins un comonomère. Les copolymères d'éthylène sont les plus avantageux. On peut citer à titre de comonomère, les alpha-oléfines contenant de 3 à 8 atomes de carbone. Le butène, l'hexène et leurs mélanges sont préférés. La teneur en comonomère dans le polymère d'éthylène est généralement d'au moins 0,1 % en poids, en particulier d'au moins 0,5 % en poids, les valeurs d'au moins 1 % en poids étant favorables. La teneur en comonomère est d'au plus 5 % en poids.

Les polymères d'éthylène selon l'invention présentent habituellement un indice de fluidité mesuré à 190°C sous une charge de 5 kg selon la norme ASTM D 1238 - Condition P (1986) (appelé ci-après $MI_5$) d'au moins 0,3 g/10 min, en particulier d'au moins 0,6 g/10 min. Le $MI_5$ ne dépasse pas en général, 10 g/10 min, le plus souvent pas 5 g/10 min, et plus spécialement pas 2 g/10 min.

Des polymères d'éthylène selon l'invention qui sont préférés sont en outre caractérisés par une viscosité dynamique η exprimée en dPa.s et mesurée à un gradient de vitesse de 100 s⁻¹ à 190°C telle que le rapport

$$\frac{\log (177470/MI_5) - \log \eta}{2 - \log (2{,}53 \times MI_5)}$$

soit d'au moins 0,55. De préférence, ce rapport est d'au moins 0,59, les valeurs d'au moins 0,61 étant particulièrement avantageuses. Dans la plupart des cas, ce rapport est d'au plus 0,73, et le plus souvent d'au plus 0,70.

Les polymères d'éthylène selon l'invention présentent couramment une masse volumique standard (ou densité) mesuré selon la norme ISO 1183 (1987) d'au moins 945 kg/m³, en particulier d'au moins 950 kg/m³, les valeurs d'au moins 952 kg/m³ étant préférées. La masse volumique standard ne dépasse pas, en général, 965 kg/m³, plus précisément pas 960 kg/m³, les valeurs d'au plus 958 kg/m³ étant les plus préférées.

L'invention concerne aussi divers procédés de préparation du polymère d'éthylène décrit ci-dessus.

Dans un premier procédé de préparation de polymère d'éthylène selon l'invention on met en oeuvre un seul solide catalytique contenant du titane et du zirconium à titre d'éléments actifs dans une polymérisation en deux réacteurs disposés en série.

Le premier procédé de préparation consiste plus particulièrement à polymériser l'éthylène éventuellement avec un ou plusieurs comonomères dans deux réacteurs en série en présence d'un solide catalytique comprenant du titane et du zirconium dans un rapport molaire Zr/Ti d'au moins 2 et d'un cocatalyseur, le premier réacteur étant alimenté en éthylène, éventuellement en comonomère et/ou en hydrogène, en solide catalytique et en cocatalyseur, le milieu réactionnel du premier réacteur étant transféré dans le deuxième réacteur, et le deuxième réacteur étant en outre alimenté en éthylène et éventuellement en comonomère. De préférence, on introduit de l'hydrogène dans au moins un des deux réacteurs.

Le solide catalytique utilisé dans le premier procédé selon l'invention comprend avantageusement de 0,5 à 10 % en poids de titane (de préférence de 1 à 6 % en poids), de 5 à 40 % en poids de zirconium (de préférence de 10 à 25 % en poids), le rapport molaire Zr/Ti étant d'au moins 2, de 20 à 80 % en poids d'halogène (de préférence de 40 à 60 % en poids), de 1 à 30 % en poids de magnésium (de préférence de 5 à 15 % en poids), et de 0,5 à 10 % en poids d'aluminium (de préférence de 1 à 3 % en poids). Le solde est constitué de groupements organiques résiduels provenant des réactifs mis en oeuvre, en particulier des groupements alkoxy et alkyle. L'halogène est de préférence le chlore.

Le rapport Zr/Ti dans le solide catalytique est de préférence d'au moins 2,5, les valeurs d'au moins 3 étant particulièrement préférées. Le rapport Zr/Ti ne dépasse pas le plus souvent 10, plus précisément pas 8, les valeurs d'au plus 6 étant préférées.

Dans un deuxième procédé de préparation de polymère d'éthylène selon l'invention on met en oeuvre un mélange de deux solides catalytiques, le premier contenant un seul élément actif, à savoir le titane, et le deuxième contenant deux éléments actifs, à savoir le titane et le zirconium, dans une polymérisation en deux réacteurs en série, et un cocatalyseur, le premier réacteur étant alimenté en éthylène, éventuellement en comonomère et/ou en hydrogène, en premier et second solides catalytiques et en cocatalyseur, le milieu réactionnel du premier réacteur étant transféré dans le deuxième réacteur, et le deuxième réacteur étant en outre alimenté en éthylène et éventuellement en comonomère et/ou en hydrogène.

Le deuxième procédé de préparation des polymères d'éthylène conforme à l'invention consiste plus particulièrement à polymériser l'ethylène éventuellement avec un ou plusieurs comonomères dans deux réacteurs en série, en présence d'un premier solide catalytique constitué essentiellement de 10 à 30 % en poids de titane, de 20 à 60 % en poids d'halogène, de 0,5 à 20 % en poids de magnésium et de 0,1 à 10 % en poids d'aluminium, d'un second solide catalytique constitué essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium. De préférence, on introduit de l'hydrogène dans au moins un des deux réacteurs.

Les deux solides catalytiques peuvent éventuellement être mélangés préalablement à la mise en oeuvre dans le procédé de polymérisation. Le mélange préalable s'effectue alors avantageusement à température ambiante.

De préférence, le premier solide catalytique est constitué essentiellement de 15 à 20 % en poids de titane, de 30 à 50 % en poids d'halogène, de 1 à 10 % de magnésium et de 0,5 à 5 % en poids d'aluminium. Le solde est constitué de groupements organiques résiduels provenant des réactifs mis en oeuvre, en particulier des groupements alkoxy et alkyle. L'halogène est habituellement le chlore.

Le plus souvent, le second solide catalytique est constitué essentiellement de 1 à 6 % en poids de titane, de 10 à 25 % en poids de zirconium, de 40 à 60 % en poids d'halogène, de 5 à 15 % en poids de magnésium et de 1 à 3 % en poids d'aluminium. Le solde est constitué de groupements organiques résiduels provenant des réactifs mis en oeuvre, en particulier des groupements alkoxy et alkyle. Dans la plupart des cas, l'halogène est le chlore.

Dans le deuxième procédé selon l'invention les deux solides catalytiques sont en général mis en oeuvre en des quantités telles que le rapport molaire de titane provenant du premier solide catalytique au titane provenant du second solide catalytique soit d'au moins 1, en particulier d'au moins 1,25, les valeurs d'au moins 1,50 étant préférées. Le rapport est habituellement d'au plus 10, plus spécifiquement d'au plus 5, les valeurs d'au plus 4 étant préférées.

Le cocatalyseur mis en oeuvre dans le premier ou dans le deuxième procédé peut être tout cocatalyseur connu de la technique, notamment les composés organoaluminiques. On peut citer à titre d'exemples les trialkylaluminiums, en particulier ceux dont le groupement alkyle comporte jusqu'à 20 atomes de carbone (de préférence de 2 à 8 atomes de carbone), tels que le triéthylaluminium et le triisobutylaluminium. Le triéthylaluminium est préféré.

Selon un mode de réalisation particulier le ou les solides catalytiques mis en oeuvre dans le premier et le deuxième procédés de préparation de polymères d'éthylène selon l'invention sont préparés en faisant réagir, dans une première étape, un composé oxygéné organique de magnésium avec un composé oxygéné organique de titane, et avec, le cas échéant, un composé oxygéné organique de zirconium jusqu'à l'obtention d'un complexe liquide, et en traitant ledit complexe liquide, dans une deuxième étape, au moyen d'un composé organoaluminique halogéné de formule générale $AlR_nX_{3-n}$ dans laquelle R est un radical hydrocarboné, X est un halogène et n est inférieur à 3, pour précipiter le complexe liquide en un solide catalytique.

Aux fins de la présente invention on entend désigner par "composé oxygéné organique de magnésium", les composés comprenant au moins une séquence de liaisons magnésium-oxygène-radical organique par atome de magnésium. Le radical organique comprend en général jusqu'à 20 atomes de carbone et, plus particulièrement jusqu'à 10 atomes de carbone, de préférence de 2 à 6 atomes de carbone. Le radical organique peut être choisi parmi les radicaux alkyles (linéaires ou branchés), alkényles, aryles, cycloalkyles, arylalkyles, alkylaryles, acyles et leurs dérivés substitués. Les meilleurs résultats sont obtenus avec les alkoxydes de magnésium. Les dialkoxydes de magnésium sont préférés, en particulier le diéthylate de magnésium.

Par "composé oxygéné organique de titane ou de zirconium" on entend désigner les composés comprenant au moins une séquence de liaisons titane (ou zirconium)-oxygène-radical organique par atome de titane ou de zirconium. Le radical organique est conforme à ceux définis ci-dessus pour les composés oxygénés organiques de magnésium. On utilise de préférence les composés de titane ou de zirconium tétravalents. Parmi les composés oxygénés organiques de titane ou de zirconium, on peut citer les alkoxydes, les phénoxydes, les oxyalkoxydes, les alkoxydes condensés, les carboxylates et les énolates. Les meilleurs résultats sont obtenus avec les alkoxydes. Les préférés sont les tétraalkoxydes du titane ou du zirconium, en particulier le tétrabutylate de titane ou de zirconium.

La première étape de préparation du ou des solides catalytiques consiste à préparer un complexe liquide par réaction du composé oxygéné organique de magnésium avec le composé oxygéné organique de titane et, lorsque le solide catalytique comprend également du zirconium, avec le composé oxygéné organique de zirconium. On peut opérer la réaction en présence d'un diluant. Le diluant est généralement choisi parmi les alcanes linéaires ou ramifiés ou les cycloalcanes contenant jusqu'à 20 atomes de carbone. L'hexane convient bien.

La quantité mise en oeuvre du composé oxygéné organique de titane est en général d'au moins 0,01 mole de titane par mole de magnésium mise en oeuvre, en particulier d'au moins 0,02 mole, les valeurs d'au moins 0,05 mole étant préférées. La quantité est habituellement d'au plus 20 moles de titane par mole de magnésium mise en oeuvre, plus précisément d'au plus 10 moles, les valeurs d'au plus 5 moles étant préférées. La quantité mise en oeuvre du composé oxygéné organique de zirconium dépend alors du rapport molaire Zr/Ti souhaité.

La deuxième étape de préparation du ou des solides catalytiques, que l'on appelle l'étape de précipitation, a pour fonction de réduire la valence du métal de transition et simultanément d'halogéner le composé oxygéné organique de magnésium, le composé oxygéné organique de titane et, le cas échéant, le composé oxygéné organique de zirconium, c'est-à-dire de substituer les groupements alkoxy présents dans ces composés par des halogènes, de sorte que le complexe liquide obtenu à l'issue de la première étape soit précipité en un solide catalytique. La réduction et l'halogénation sont réalisées simultanément au moyen du composé organoaluminique halogéné agissant comme un agent réducto-halogénant provoquant la précipitation d'un solide catalytique.

Le traitement au moyen du composé organoaluminique halogéné dans l'étape de précipitation est effectué par mise en contact du complexe liquide issu de la première étape avec le composé organoaluminique halogéné, et de préférence en ajoutant progressivement le composé organoaluminique halogéné au complexe liquide.

Le composé organoaluminique halogéné répond avantageusement à la formule $AlR_nX_{3-n}$ dans laquelle R est un radical hydrocarboné comprenant jusqu'à 20 atomes de carbone et de préférence jusqu'à 6 atomes de carbone. Les meilleurs résultats sont obtenus lorsque R représente un radical alkyle linéaire ou branché. X est généralement du chlore. De préférence n ne dépasse pas 1,5, plus spécialement pas 1. On préfère le dichlorure d'éthylaluminium ou le dichlorure d'isobutylaluminium.

La quantité de composé organoaluminique halogéné à mettre en oeuvre est en général d'au moins 0,5 mole d'aluminium par mole mise en oeuvre de titane et de zirconium, de préférence d'au moins 1 mole, les valeurs d'au moins 2 moles étant les plus courantes; elle est couramment d'au plus 50 moles d'aluminium par mole mise en oeuvre de titane et de zirconium, en particulier d'au plus 30 moles, les valeurs d'au plus 20 moles étant avantageuses.

A l'issue de l'étape de précipitation du complexe liquide au moyen du composé organoaluminique halogéné, on recueille un solide catalytique constitué d'un précipité homogène (les constituants étant coprécipités à partir d'un complexe liquide) d'un mélange essentiellement amorphe d'un halogénure de magnésium, d'un halogénure de titane et, le cas échéant, d'un halogénure de zirconium et éventuellement de composés partiellement réduits et/ou partiellement halogénés. Il s'agit de complexes chimiquement liés, produits de réactions chimiques, et non pas du résultat de mélanges ou de phénomènes d'adsorption. En effet, il est impossible de dissocier l'un ou l'autre des constituants de ces complexes en utilisant des méthodes de séparation purement physiques.

Le solide catalytique comprenant du titane et du zirconium obtenu selon le mode de préparation particulier décrit ci-dessus permet aussi, lorsqu'il est utilisé dans un procédé de polymérisation d'oléfines dans deux réacteurs en série, d'obtenir des polyoléfines autres que les polymères d'éthylène conformes à l'invention. L'invention concerne dès lors également un procédé de polymérisation d'oléfines, selon lequel on polymérise l'oléfine éventuellement avec un ou plusieurs comonomères dans deux réacteurs en série, en présence d'un solide catalytique comprenant du titane et du zirconium dans un rapport molaire Zr/Ti d'au moins 2 et d'un cocatalyseur, le premier réacteur étant alimenté en oléfine et éventuellement en comonomère et/ou en hydrogène, en solide catalytique et en cocatalyseur, le milieu réactionnel du premier réacteur étant transféré dans le deuxième réacteur, et le deuxième réacteur étant en outre alimenté en oléfine et éventuellement en comonomère et/ou en hydrogène. Le solide catalytique est préparé en faisant réagir, dans une première étape, un composé oxygéné organique de magnésium avec un composé oxygéné organique de titane et avec un composé oxygéné organique de zirconium jusqu'à l'obtention d'un complexe liquide, et en traitant ledit complexe liquide, dans une deuxième étape, au moyen d'un composé organoaluminique halogéné de formule générale AlR$_n$X$_{3-n}$ dans laquelle R est un radical hydrocarboné, X est un halogène et n est inférieur à 3 pour précipiter le complexe liquide en un complexe catalytique solide. Le procédé permet d'obtenir, avec une productivité élevée, des polymères particulièrement homogènes.

L'oléfine peut être choisie parmi les oléfines contenant de 2 à 20 atomes de carbone, et de préférence de 2 à 6 atomes de carbone, telles que l'éthylène, le propylène, le butène-1, le 4-méthylpentène-1 et l'hexène-1. L'éthylène, le butène-1 et l'hexène-1 conviennent bien. L'éthylène est particulièrement préféré. Le comonomère peut être choisi parmi les oléfines citées ci-dessus et parmi les dioléfines comprenant de 4 à 20 atomes de carbone. Il va de soi que le comonomère introduit au deuxième réacteur peut être différent de celui qui est introduit au premier réacteur.

Le mélange des deux solides catalytiques utilisés dans le deuxième procédé de préparation d'un polymère d'éthylène conforme à l'invention, peut aussi être utilisé dans d'autres procédés de polymérisation d'oléfines dans un seul réacteur ou dans deux réacteurs disposés en série. L'invention porte alors aussi sur un système catalytique pour la polymérisation d'oléfines comprenant :

(a) un premier solide catalytique consistant essentiellement de 10 à 30 % en poids de titane, de 20 à 60 % en poids d'halogène, de 0,5 à 20 % en poids de magnésium et de 0,1 à 10 % en poids d'aluminium,
(b) un second solide catalytique consistant essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium, et
(c) un cocatalyseur.

L'utilisation d'un mélange de deux solides catalytiques permet de modifier très rapidement les propriétés du polymère obtenu en ajustant la composition dudit mélange.

Dans un troisième procédé de préparation de polymères d'éthylène selon l'invention on met en oeuvre un solide catalytique contenant du chrome à titre d'élément actif sur un support.

Le troisième procédé de préparation du polymère d'éthylène conforme à l'invention consiste plus particulièrement à polymériser de l'ethylène éventuellement avec un ou plusieurs comonomères dans un seul réacteur en présence d'un solide catalytique comprenant du chrome sur un support contenant au moins deux constituants choisis parmi la silice, l'alumine et le phosphate d'aluminium, éventuellement en présence d'un cocatalyseur et/ou d'hydrogène.

Un quatrième procédé de préparation du polymère d'éthylène conforme à l'invention consiste à polymériser de l'ethylène éventuellement avec un ou plusieurs comonomères dans deux réacteurs disposés en série, en présence d'un solide catalytique comprenant du chrome sur un support contenant au moins deux constituants choisis parmi la silice, l'alumine et le phosphate d'aluminium, et d'un cocatalyseur, le premier réacteur étant alimenté en éthylène, éventuellement en comonomère et/ou en hydrogène, et en solide catalytique, le milieu réactionnel du premier réacteur étant transféré dans le deuxième réacteur, le deuxième réacteur étant en outre alimenté en éthylène et éventuellement en comonomère et/ou en hydrogène, et le cocatalyseur étant présent dans au moins un des deux réacteurs. Le cocatalyseur est avantageusement mis en oeuvre uniquement dans le deuxième réacteur.

Le solide catalytique utilisé dans le troisième et le quatrième procédés de préparation de polymères d'éthylène selon l'invention peut être obtenu de manière connue en soi par imprégnation de la poudre de support avec une solution aqueuse ou organique d'un composé du chrome, suivie d'un séchage en atmosphère oxydante. On peut utiliser à cet effet un composé du chrome choisi parmi les sels solubles tels que les oxydes, l'acétate, le chlorure, le sulfate, le chromate et le bichromate en solution aqueuse, ou tel que l'acétylacétonate en solution organique. Après l'imprégnation du support avec le composé du chrome, le support imprégné est habituellement activé en le chauffant à une température de 400 à 1000 °C pour transformer une partie au moins du chrome en chrome hexavalent. Le solide catalytique selon l'invention peut également être obtenu au moyen d'un mélange mécanique de la poudre du support avec un composé solide du chrome, par exemple de l'acétylacétonate de chrome. Ensuite, ce mélange peut être préactivé à une température inférieure à la température de fusion du composé du chrome avant de l'activer conventionnellement comme décrit ci-dessus. Dans le solide catalytique utilisé dans le troisième et le quatrième procédés, le chrome est généralement présent en proportion variant de 0,05 à 10 % en poids, de préférence de 0,1 à 5 % en poids, plus particulièrement de 0,25 à 2 % en poids de chrome sur base du poids total du solide catalytique.

Le cocatalyseur qui est utilisé facultativement dans le troisième procédé et obligatoirement dans au moins un réacteur dans le quatrième procédé selon l'invention, peut être choisi parmi les composés organométalliques de l'aluminium ou du bore. Les meilleurs résultats sont obtenus avec les composés organoboriques car ils permettent d'augmenter l'activité catalytique. On peut utiliser à titre de composé organoborique les trialkylbores dont les chaînes alkyles comprennent jusqu'à 20 atomes de carbone. En général, on préfère ceux dont les chaînes alkyles sont droites et comprennent jusqu'à 18 atomes de carbone, plus particulièrement de 2 à 8 atomes de carbone. Le triéthylbore est préféré. La quantité totale de cocatalyseur mise en oeuvre est en général de 0,02 à 50 mmoles par litre de solvant, de diluant ou de volume de réacteur et de préférence de 0,2 à 2,5 mmoles par 1.

Le support utilisé dans le troisième et le quatrième procédés de préparation d'un polymère d'éthylène conforme à l'invention présente avantageusement une surface spécifique d'au moins 100 m$^2$/g, en particulier d'au moins 180 m$^2$/g, les valeurs d'au moins 220 m$^2$/g étant les plus favorables. La surface spécifique est le plus souvent d'au plus 800 m$^2$/g, plus précisément d'au plus 700 m$^2$/g, les valeurs d'au plus 650 m$^2$/g étant les plus courantes. La surface spécifique (SS) du support est mesurée selon la méthode volumétrique BET de la norme britannique BS 4359/1(1984).

Le support utilisé dans le troisième et le quatrième procédés présente en général une température de cristallisation d'au moins 700 °C, telle que par exemple d'au moins 1000 °C. La température de cristallisation du support est déterminée en soumettant un échantillon du support à un traitement thermique à différentes températures (500 °C, 700 °C, 800 °C, 950 °C, 1050 °C), et en examinant ensuite, après chaque traitement thermique, cet échantillon par diffraction des rayons X.

Le support utilisé dans le troisième et le quatrième procédés présente habituellement un volume poreux d'au moins 1,5 cm$^3$/g, plus spécialement d'au moins 2 cm$^3$/g, les valeurs d'au moins 2,2 cm$^3$/g étant recommandées. Le volume poreux est généralement d'au plus 5 cm$^3$/g, en particulier d'au plus 4,5 cm$^3$/g, les valeurs d'au plus 4 cm$^3$/g étant courantes. Le volume poreux (VP) est la somme du volume poreux constitué de pores de rayon inférieur ou égal à 75 Å, mesuré par la méthode de pénétration à l'azote (BET) selon la technique volumétrique décrite dans la norme britannique BS 4359/1 (1984), et du volume poreux mesuré par la méthode de pénétration au mercure au moyen du porosimètre de type PORO 2000 commercialisé par CARLO ERBA CO, selon la norme belge NBN B 05-202 (1976). De bons résultats peuvent être obtenus lorsque la surface spécifique (SS) et le volume poreux (VP) du support répondent à la relation suivante :

$$SS < (VP \times 564 - 358),$$

dans laquelle SS et VP sont respectivement les valeurs numériques de la surface spécifique exprimée en m$^2$/g et du volume poreux exprimé en cm$^3$/g.

Le support utilisé dans le troisième et le quatrième procédés, lorsqu'il ne contient que deux des constituants précités, contient avantageusement la silice et l'alumine dans un rapport molaire de 0,01 à 99 (de préférence de 0,05 à 20), la silice et le phosphate d'aluminium dans un rapport molaire de 0,01 à 99 (de préférence de 0,05 à 20), l'alumine et le phosphate d'aluminium dans un rapport molaire de 0,01 à 99 (de préférence de 0,05 à 20). De préférence, le support contient la silice (X), l'alumine (Y) et le phosphate d'aluminium (Z) en un pourcentage molaire (X):(Y):(Z) de (10 à 95):(1 à 80):(1 à 85), et plus particulièrement de (20 à 80):(1 à 60):(5 à 60). Le support peut éventuellement contenir en outre du titane. La quantité de titane présente dans le support, exprimée en pourcentage molaire de TiO$_2$ par rapport au support du solide catalytique contenant la silice, l'alumine, le phosphate d'aluminium et le dioxyde de titane, est en général au moins égale à 0,1 % mol, de préférence à 0,5 % mol; les valeurs d'au moins 1 % mol étant les plus courantes. La quantité de titane exprimée en pourcentage molaire de TiO$_2$ ne dépasse pas le plus souvent 40 % mol, plus particulièrement pas 20 % mol, les valeurs d'au plus 15 % mol étant recommandées.

Le support utilisé dans le troisième et le quatrième procédés mettant en oeuvre des solides catalytiques au chrome se présente généralement à l'état d'une poudre dont les grains ont un diamètre de 20 à 200 μm. Il présente habituellement un poids spécifique apparent supérieur ou égal à 50 kg/m$^3$, en particulier à 100 kg/m$^3$; il est généralement au maximum égal à 500 kg/m$^3$, typiquement à 300 kg/m$^3$. Le poids spécifique apparent est mesuré par écoulement libre selon le mode opératoire suivant : dans un récipient cylindrique de 50 cm$^3$ de capacité, on verse la poudre du support à analyser en évitant de la tasser, depuis une trémie dont le bord inférieur est disposé 20 mm au-dessus du bord supérieur du récipient. On pèse ensuite le récipient rempli de la poudre et arasé à l'aide d'une latte rectiligne, on déduit la tare du poids relevé et on divise le résultat obtenu (exprimé en g) par 50.

Un procédé particulier d'obtention du support utilisé dans le troisième et le quatrième procédés consiste à mélanger, dans une première étape, un alcool, de l'eau, un alcoolate de silicium et un acide en des quantités telles que le rapport molaire eau/silicium soit de 2 à 50, à ajouter au milieu d'hydrolyse ainsi obtenu, dans une deuxième étape, une solution acide d'un composé d'aluminium et une solution d'une source d'ions phosphates, et, dans une troisième étape, un agent de précipitation pour obtenir un précipité, à laver, dans une quatrième étape, le précipité ainsi obtenu à l'eau et ensuite au moyen d'un liquide organique, puis à le sécher, dans une cinquième étape, par distillation jusqu'à l'obtention d'une poudre, et à calciner la poudre.

L'alcoolate de silicium mis en oeuvre à la première étape du procédé particulier d'obtention du support, comprend de préférence un groupement alkoxy de 1 à 20 atomes de carbone. Les groupements alkoxy du type aliphatique sont recommandés, spécialement ceux du type aliphatique saturé, non substitué. Les alcoolates de silicium qui conviennent bien sont le tétra-éthylate, le tétra-méthylate et le tétra-isopropylate de silicium. Le tétra-éthylate de silicium est préféré.

L'alcool mis en oeuvre dans la première étape du procédé particulier d'obtention du support a pour fonction de dissoudre l'alcoolate de silicium. Les alcools aliphatiques linéaires sont préférés. On peut citer comme exemple l'éthanol, l'isopropanol et le méthanol. L'éthanol est préféré. On utilise avantageusement un alcool dont le groupement hydrocarboné correspond à celui du groupement alkoxy de l'alcoolate de silicium utilisé.

La première étape est avantageusement réalisée à pH acide et comprend, d'une part, l'adjonction de l'eau, de l'acide, de l'alcoolate de silicium et de l'alcool, la température, pendant l'adjonction, étant inférieure ou égale à 30 °C (en particulier inférieure à 20 °C, typiquement environ 10 °C, les températures supérieures à 0 °C étant recommandées), et, d'autre part, un mûrissage du milieu réactionnel ainsi obtenu à une température au moins égale à 20 °C et inférieure à la température d'ébullition du milieu (par exemple de 30 à 100 °C, les températures de 40 à 80 °C étant les plus courantes et celles de 50 à 70 °C étant recommandées), de manière à substituer une partie au moins des groupements alkoxy de l'alcoolate de silicium par des groupements hydroxy, sans qu'il se produise une gélification ou une précipitation de silice. Dans la première étape, le pH du milieu réactionnel est en général inférieur à 3, de préférence de 0,5 à 2,5, par exemple environ égal à 1. L'acide mis en oeuvre à la première étape peut être de nature minérale ou organique. Il peut par exemple s'agir de l'acide chlorhydrique, nitrique, phosphorique ou sulfurique. L'acide chlorhydrique convient particulièrement bien. De préférence, le mûrissage est réalisé à une température supérieure à celle de l'addition des réactifs. Le mûrissage a pour fonction de permettre une hydrolyse et une condensation partielles de l'alcoolate de silicium.

La deuxième étape du procédé particulier d'obtention du support consiste à ajouter au milieu issu de la première étape une solution acide d'un composé d'aluminium et une solution d'une source d'ions phosphates. Le composé d'aluminium peut être choisi parmi les sels inorganiques d'aluminium et les alcoolates d'aluminium. Les alcoolates d'aluminium contenant des groupements aliphatiques linéaires saturés non substitués sont recommandés. Les groupements aliphatiques contiennent de préférence de 1 à 20 atomes de carbone. Les alcoolates d'aluminium dont le groupement alkoxy correspond à celui de l'alcoolate de silicium utilisé, conviennent particulièrement bien. Le nitrate et le chlorure d'aluminium sont particulièrement préférés. Aux fins de la présente invention, on entend désigner par source d'ions phosphates tout composé susceptible de former des ions phosphates. Spécialement recommandés sont les sels inorganiques phosphatés, les éthers-sels phosphatés et l'acide phosphorique. On utilise de préférence l'acide phosphorique. Dans la deuxième étape du procédé particulier d'obtention du support, on préfère opérer de manière très lente pour éviter que le milieu s'échauffe, par exemple à une température inférieure à 30 °C, typiquement inférieure ou égale à 20 °C, par exemple comprise entre 0 et 10 °C.

La troisième étape du procédé particulier d'obtention du support consiste à former un précipité sous l'effet d'un agent de précipitation, qui peut être choisi parmi tous les composés susceptibles de provoquer une coprécipitation des réactifs mis en oeuvre à la première et la deuxième étape (l'alcoolate de silicium hydrolysé et partiellement condensé issu de la première étape et défini plus haut, le composé d'aluminium et la source d'ions phosphates) sous la forme d'un oxyde mixte de silicium, d'aluminium et de phosphore. On peut citer comme exemples d'agent de précipitation, l'oxyde d'éthylène, le carbonate d'ammonium et l'hydroxyde d'ammonium. On utilise de préférence une solution aqueuse d'hydroxyde d'ammonium. Le pH du milieu de coprécipitation est généralement supérieur ou égal à 5, typiquement supérieur ou égal à 6; il est habituellement inférieur à 11, les valeurs inférieures à 10 étant recommandées. De préférence, on maintient le pH constant à une valeur de 6 à 10, par exemple 8, pendant toute la durée de la coprécipitation.

Dans la quatrième étape du procédé particulier d'obtention du support, le lavage à l'eau consiste en général à mettre le précipité en contact avec une quantité d'eau suffisante pour éliminer les impuretés contenues dans le précipité, et ensuite à éliminer une partie au moins de cette quantité d'eau par tout moyen connu adéquat, par exemple par centrifugation ou par filtration.

On opère de préférence par centrifugation. Ensuite, on soumet le précipité lavé à l'eau, à un lavage au moyen d'un liquide organique, qui a pour fonction d'éliminer l'eau qui imprègne le précipité. Le liquide organique présente préférentiellement une température de vaporisation inférieure à 120 °C, typiquement inférieure à 100 °C, par exemple de 70 à 90 °C. Des liquides organiques utilisables sont les alcools, les éthers ou leurs mélanges. Les alcools sont préférés, particulièrement ceux comprenant de 1 à 4 atomes de carbone. L'isopropanol convient bien.

Le précipité lavé est ensuite soumis, dans une cinquième étape du procédé particulier d'obtention du support, à un séchage par atomisation ou par distillation, de préférence azéotropique, afin d'évaporer l'eau et le liquide organique non éliminés précédemment, jusqu'à l'obtention d'une poudre du support.

A l'issue du séchage, on recueille une poudre du support, que l'on soumet à une calcination. La calcination a pour fonction d'extraire, à température élevée, les impuretés organiques de la poudre. Elle est généralement poursuivie jusqu'à ce que le poids de la poudre reste constant au cours du temps, tout en évitant une cristallisation de la poudre. La calcination peut être effectuée sous air (de préférence sous air sec) dans un lit fluidisé à une température inférieure à la température de cristallisation de la poudre. La température est en général de 300 à 1500 °C, typiquement de 350 à 1000 °C, de préférence de 400 à 600 °C.

Lorsque l'on utilise un support choisi parmi les supports binaires $SiO_2$-$AlPO_4$, $Al_2O_3$-$AlPO_4$ et parmi les supports ternaires $SiO_2$-$Al_2O_3$-$AlPO_4$ tels que décrits ci-dessus dans un procédé de polymérisation d'oléfines dans deux réacteurs en série, on peut également obtenir des polyoléfines autres que le polymère d'éthylène conforme à l'invention. Par conséquent, l'invention porte également sur un procédé de polymérisation d'oléfines, selon lequel on polymérise l'oléfine éventuellement avec un ou plusieurs comonomères dans deux réacteurs disposés en série, en présence d'un solide catalytique comprenant du chrome sur un support choisi parmi les supports binaires $SiO_2$-$AlPO_4$, $Al_2O_3$-$AlPO_4$ et les supports ternaires $SiO_2$-$Al_2O_3$-$AlPO_4$, et d'un cocatalyseur, le premier réacteur étant alimenté en éthylène et éventuellement en comonomère et/ou en hydrogène, en solide catalytique, le milieu réactionnel du premier réacteur étant transféré dans le deuxième réacteur, le deuxième réacteur étant en outre alimenté en éthylène et éventuellement en comonomère et/ou en hydrogène, et le cocatalyseur étant présent dans au moins un des deux réacteurs.

Les procédés de polymérisation de l'invention peuvent être effectués selon tout procédé connu, en solution dans un solvant qui peut être l'oléfine elle-même à l'état liquide, ou en suspension dans un diluant hydrocarboné, ou encore en phase gazeuse. On obtient de bons résultats dans les polymérisations en suspension.

Le principe d'une polymérisation dans deux réacteurs disposés en série est celui décrit dans la demande de brevet EP 603935 (SOLVAY). L'installation peut évidemment comprendre plus de deux réacteurs connectés en série. Les procédés de polymérisation en deux réacteurs en série sont avantageusement réalisés de manière à utiliser dans le deuxième réacteur des conditions de polymérisation (température, concentration en agent de transfert tel que l'hydrogène, concentration en comonomère éventuel, concentration en cocatalyseur éventuel,...) différentes de celles mises en oeuvre dans le premier réacteur. Ainsi, le polymère produit dans le deuxième réacteur présente un indice de fluidité différent de celui produit dans le premier réacteur. On peut donc faire en sorte que l'indice de fluidité obtenu dans le premier réacteur soit plus faible que celui obtenu dans le deuxième réacteur. En variante, on peut obtenir un indice de fluidité plus élevé dans le premier réacteur que celui obtenu dans le deuxième réacteur.

Les exemples qui suivent sont destinés à illustrer l'invention. La signification des symboles utilisés dans ces exemples, les unités exprimant les grandeurs mentionnées et les méthodes de mesure de ces grandeurs sont explicitées ci-dessous.

$MI_2$ = indice de fluidité du polyéthylène mesuré à 190 °C sous une charge de 2,16 kg selon la norme ASTM D 1238 (condition E) (1986).

$MI_5$ = indice de fluidité du polyéthylène mesuré à 190°C sous une charge de 5 kg selon la norme ASTM D 1238 (condition P) (1986).

MVS = masse volumique standard du polyéthylène exprimée en $kg/m^3$ et mesurée selon la norme ISO 1183 (1987).

$\eta$ = viscosité dynamique du polyéthylène exprimée en dPa.s et mesurée à un gradient de vitesse de 100 $s^{-1}$ à 190°C.

ESCR = résistance à la fissuration sous contrainte exprimée en heure et mesurée par la méthode suivante : Dix plaques de dimensions 125 mm x 12,7 mm x 3,2 mm sont pressées à partir d'une feuille en polymère d'éthylène. Deux entailles y sont apportées, la première à 60 mm d'un bout de la plaque et la deuxième à 15 mm de l'autre bout de la plaque. Les plaques entaillées sont soumises à une force de flexion constante de 7,36 N, correspondant à une contrainte inférieure à la contrainte au seuil d'écoulement plastique, et immergées simultanément dans une solution tensio-active comprenant 3 ml de nonylphénoxypoly (éthylèneoxy)éthanol par litre d'eau à la température de 60°C. Le temps à l'issue duquel les éprouvettes se rompent est relevé et le temps moyen correspondant à la rupture de 50 % des éprouvettes est calculé.

$T_G$ = taux de gonflement du polymère d'éthylène (sans unité). La méthode de mesure consiste à extruder, à 190°C et à un gradient de vitesse

de 100 s$^{-1}$, le polymère d'éthylène au travers d'une filière d'une longueur de 30 mm et d'un diamètre de 2 mm et à une vitesse d'extrusion constante, et à mesurer le déplacement du piston nécessaire pour extruder une longueur de jonc de 70 mm. Le taux de gonflement est défini par la relation $T_G=0{,}5707 \sqrt{e}$, dans laquelle e représente le déplacement du piston exprimé en mm. Le cylindre et le piston du rhéomètre utilisé pour cette mesure répondent aux critères de celui utilisé pour la mesure de l'indice de fluidité selon la norme ASTM D 1238 (1986).

P = productivité du solide catalytique exprimée en kg de polyéthylène produit par gramme de titane mis en oeuvre.

Exemple 1 (de référence)

Dans cet exemple on a préparé un polymère d'éthylène dans deux réacteurs en série à l'aide d'un catalyseur au titane selon le mode opératoire décrit dans la demande de brevet EP 603935 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium en une quantité telle que le rapport molaire d'aluminium au magnésium soit égal à 6,5, pendant 90 minutes à 45°C. Le solide ainsi obtenu comprenait 15,8 % en poids de Ti, 36,0 % en poids de Cl, 2,2 % en poids d'Al et 4,4 % en poids de Mg.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,27 et le solide catalytique obtenu en A. La température a été maintenue constante à une valeur 85 °C. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0085 et en butène dans un rapport molaire butène/éthylène de 0,31. La température dans le deuxième réacteur était de 70°C. La productivité P était de 200. Le polymère obtenu présentait les caractéristiques suivantes :

$MI_5$ = 1,3
$\eta$ = 15400
$T_G$ = 1,34
ESCR = 128
MVS = 956.

Le polymère obtenu présente un taux de gonflement inférieur à 1,4 tandis que les polymères d'éthylène selon l'invention présentent un taux de gonflement d'au moins 1,4.

Exemple 2 (de référence)

Dans cet exemple on a préparé un polymère d'éthylène dans un seul réacteur à l'aide d'un catalyseur au titane et au zirconium selon le mode opératoire décrit dans le brevet belge BE 840378 et on a mesuré son taux de gonflement et sa résistance à la fissuration sous contrainte.

A. Préparation du solide catalytique

On a fait réagir pendant 4 heures à 150°C du diéthylate de magnésium avec du tétrabutylate de titane et avec du tétrabutyalte de zirconium en des quantités telles que le rapport molaire Ti/Mg soit égal à 0,6 et que le rapport molaire Zr/Ti soit égal à 1,2. Ensuite, on a chloré et précipité le produit de réaction ainsi obtenu en mettant celui-ci en contact avec une solution de dichlorure d'isobutylaluminium en une quantité telle que le rapport molaire Al/Mg soit de 11 à 45°C. On a mélangé le solide catalytique avec du tétraisopropylate de titane à raison de 150 g par kg de solide catalytique. Le solide ainsi obtenu comprenait 6,4 % en poids de Ti, 12,6 % en poids de Zr, 55,2 % en poids de Cl, 2,5 % en poids d'Al et 5,8 % en poids de Mg.

B. Polymérisation d'éthylène en un seul réacteur

On a polymérisé de l'éthylène dans un seul réacteur. On y a introduit de l'hexane, du triisobutylaluminium à titre de cocatalyseur, de l'éthylène et de l'hydrogène dans un rapport molaire hydrogène/éthylène de 0,09 et le solide catalytique obtenu en A. On a introduit du butène dans un rapport molaire butène/éthylène de 0,07. La température a été maintenue constante à une valeur de 87 °C. La productivité P était de 100. Le polymère obtenu présentait les caractéristiques suivantes :

$MI_5$ = 1,1
$\eta$ = 18300
$T_G$ = 1,59
ESCR = 38
MVS = 954.

Le polymère obtenu présente une résistance à la fissuration sous contrainte inférieur à 55 h tandis que les polymères d'éthylène selon l'invention présentent une résistance à la fissuration sous contrainte d'au moins 55 h.

Exemple 3 (de référence)

Dans cet exemple on a préparé un polymère d'éthylène dans un seul réacteur à l'aide d'un catalyseur au chrome sur un support en silice et on a mesuré son taux de gonflement et sa résistance à la fissuration sous contrainte.

A. Préparation du solide catalytique

On a utilisé le catalyseur commercial EP30X de la société CROSFIELD comprenant 1 % en poids de Cr supporté sur de la silice. On a calciné le catalyseur dans un lit fluidisé à 760 °C pendant 12 heures sous air sec, et on a recueilli le solide catalytique.

B. Polymérisation d'éthylène en un seul réacteur

On a polymérisé de l'éthylène dans un seul réacteur. On y a introduit de l'isobutane, de l'éthylène et de l'hexène dans un rapport molaire hexène/éthylène de 0,017 et le solide catalytique obtenu en A. La pression totale dans le réacteur et la température ont été maintenues constantes à une valeur de 4,2 MPa et 103 °C respectivement. Le polymère obtenu présentait les caractéristiques suivantes :

$MI_5$ = 0,86
$\eta$ = 17900
$T_G$ = 1,67
ESCR = 24
MVS = 954,0.

Le polymère obtenu présente une résistance à la fissuration sous contrainte inférieur à 55 h tandis que les polymères d'éthylène selon l'invention présentent une résistance à la fissuration sous contrainte d'au moins 55 h.

Exemple 4 (conforme à l'invention)

Dans cet exemple on a fabriqué un polymère d'éthylène conforme à l'invention au moyen du premier procédé de préparation selon l'invention.

A. Préparation du solide catalytique

On a fait réagir pendant 4 heures à 150°C du diéthylate de magnésium avec du tétrabutylate de titane et avec du tétrabutylate de zirconium en des quantités telles que le rapport molaire Ti/Mg soit égal à 0,4 et que le rapport molaire Zr/Ti soit égal à 3. Ensuite, on a chloré et précipité le produit de réaction ainsi obtenu en mettant celui-ci en contact à 45 °C avec une solution de dichlorure d'isobutylaluminium en une quantité telle que le rapport molaire Al/Mg soit de 8,4. Le solide ainsi obtenu comprenait 4,4 % en poids de Ti, 14,9 % en poids de Zr, 50,2 % en poids de Cl, 2,4 % en poids d'Al et 8,0 % en poids de Mg.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,37 et le solide catalytique obtenu en A. La température a été maintenue constante à une valeur de 85 °C. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0125 et en butène dans un rapport molaire butène/éthylène de 0,2. La température dans le deuxième réacteur était de 80°C. La productivité P était de 213. Le rapport pondéral du polymère obtenu dans le premier réacteur au polymère obtenu dans le deuxième réacteur était de 45,6/54,4. Le polymère obtenu présentait les caractéristiques suivantes :

$MI_5$ = 1,5
$\eta$ = 12800
$T_G$ = 1,49
ESCR = 143
MVS = 955.

Exemple 5 (conforme à l'invention)

Dans cet exemple on a fabriqué un polymère d'éthylène conforme à l'invention au moyen du deuxième procédé de préparation selon l'invention.

A. Préparation du mélange de solides catalytiques

A.1. Préparation du premier solide catalytique au titane

On a fait réagir pendant 4 heures à 150°C du diéthylate de magnésium avec du tétrabutylate de titane en des quantités telles que le rapport molaire de titane au magnésium soit égal à 2. Ensuite, on a chloré et précipité le produit de réaction ainsi obtenu en mettant celui-ci en contact avec une solution de dichlorure d'éthylaluminium en une quantité telle que le rapport molaire Al/Mg soit de 6,5, pendant 90 minutes à 45°C. Le solide ainsi obtenu comprenait 15,8 % en poids de Ti, 36,0 % en poids de Cl, 2,2 % en poids d'Al et 4,4 % en poids de Mg.

A.2. Préparation du second solide catalytique au titane et au zirconium

On a fait réagir pendant 4 heures à 150°C du diéthylate de magnésium avec du tétrabutylate de titane et avec du tétrabutyalte de zirconium en des quantités telles que le rapport molaire Ti/Mg soit égal à 0,6 et que le rapport molaire Zr/Ti soit égal à 2. Ensuite, on a chloré et précipité le produit de réaction ainsi obtenu en mettant celui-ci en contact avec une solution de dichlorure d'isobutylaluminium en une quantité telle que le rapport molaire Al/Mg soit de 14, d'abord à 45°C, puis à 60°C. Le solide ainsi obtenu comprenait 5,4 % en poids de Ti, 16,3 % en poids de Zr, 52,6 % en poids de Cl, 2,4 % en poids d'Al et 4,1 % en poids de Mg.

A.3. Préparation du mélange

On a mélangé le solide obtenu en A avec le solide obtenu en B à raison de telles quantités que le rapport molaire de titane provenant du premier solide catalytique au titane provenant du second solide catalytique soit de 1,5.

B. Polymérisation d'éthylène en deux réacteurs

On a polymérisé de l'éthylène dans une installation comprenant deux réacteurs disposés en série. On a introduit en continu dans le premier réacteur de l'hexane, du triéthylaluminium à titre de cocatalyseur, de l'éthylène et de l'hydrogène dans un rapport molaire hydrogène/éthylène de 0,32 et le mélange de solides catalytiques obtenu en A.3. La pression totale dans le réacteur et la température ont été maintenues constantes à une valeur de 3,2 MPa et 85 °C respectivement. Le milieu de polymérisation du premier réacteur a été retiré en continu du premier réacteur et transféré dans le deuxième réacteur, qui est en outre alimenté en éthylène, en hydrogène dans un rapport molaire hydrogène/éthylène de 0,0185 et en butène dans un rapport molaire butène/éthylène de 0,35. La pression totale dans le réacteur était de 3,0 MPa. La température dans le deuxième réacteur était de 75°C. La productivité P était de 111. Le polymère obtenu présentait les caractéristiques suivantes :

$MI_2 =$      0,32
$\eta =$      15300
$T_G =$      1,43
ESCR =   109
MVS =   956,4.

Exemple 6 (conforme à l'invention)

Dans cet exemple on a fabriqué un polymère d'éthylène conforme à l'invention au moyen du troisième procédé de préparation selon l'invention.

A. Préparation du solide catalytique

A.1. On a ajouté à une solution de tétraéthylate de silicium et d'éthanol à une température de 10°C, une solution d'eau et d'acide chlorhydrique 1M, de manière à obtenir un pH de 1. Les quantités mises en oeuvre étaient : 34,7 g de tétraéthylate de silicium, 41,7 g d'éthanol, 18,9 g d'eau et 11,5 g d'acide chlorhydrique. Ensuite, on a soumis le milieu réactionnel ainsi obtenu à un mûrissage à 60°C pendant 2 heures.

A.2. En parallèle, on a préparé une solution aqueuse contenant 62,5 g de nitrate d'aluminium hydraté, 17,1 g d'acide phosphorique et 33,3 g d'eau. Ensuite, on a ajouté la solution ainsi obtenue au milieu réactionnel obtenu en A.1, sous agitation vigoureuse et à 10°C.

A.3. On a ajouté à 500 g d'une solution aqueuse d'hydroxyde d'ammonium de pH 8 thermostatisée à 10°C, le mélange obtenu en A.2, en maintenant le pH constant à une valeur de 8, afin d'effectuer une gélification. On a soumis le gel à une maturation à pH 8, pendant 2 heures, sous agitation et à 60°C.

A.4. Ensuite, on a lavé le gel à l'eau et puis au moyen d'isopropanol et on a recueilli une suspension du gel.

A.5. On a séché le gel obtenu en A.4 par atomisation jusqu'à l'obtention d'une poudre.

A.6. On a calciné la poudre obtenue en A.5 dans un lit fluidisé sous balayage d'air sec, pednant 4 heures à 500°C. On a recueilli une poudre comprenant :

15,6 % en poids de Si
15,1 % en poids d'Al
16,3 % en poids de P

A.7 On a mélangé le support obtenu en A.6 avec de l'acétylacétonate de chrome en une quantité telle que le mélange comprenne 0,7 % en poids de chrome. Puis, on a traité le mélange ainsi obtenu dans un lit fluidisé à 150°C pendant 2 heures sous balayage d'air sec. Ensuite, on l'a calciné dans le lit fluidisé à 600°C pendant 10 heures sous air sec et on a recueilli le solide catalytique qui présentait les caractéristiques suivantes :

surface spécifique de 407 $m^2$/g
volume poreux de 2,20 $cm^3$/g
température de cristallisation supérieure à 700°C.

B. Polymérisation d'éthylène dans un seul réacteur

On a polymérisé de l'éthylène dans un seul réacteur. On y a introduit en continu de l'isobutane, de l'éthylène, de l'hydrogène dans un rapport molaire hydrogène/éthylène de 0,046 et de l'hexène dans un rapport molaire éthylène/hexène de 0,003 et le solide catalytique obtenu en A. La pression totale dans le réacteur et la température ont été maintenues constantes à une valeur de 3,8 MPa et 107 °C respectivement. Le polymère obtenu présentait les caractéristiques suivantes :

$MI_5 =$ 0,58
$\eta =$ 18000
$T_G >$ 1,5
ESCR = 111
MVS = 955,8

Exemple 7 (conforme à l'invention)

Dans cet exemple on a fabriqué un polymère d'éthylène conforme à l'invention au moyen du quatrième procédé de préparation selon l'invention.

A. Préparation du solide catalytique

On a utilisé le solide catalytique de l'exemple 6 qui a été calciné dans un lit fluidisé à 815 °C pendant 16 heures sous air sec.

B. Polymérisation d'éthylène dans deux réacteurs

Le procédé de polymérisation en deux réacteurs successifs a été simulé dans un seul réacteur en deux étapes séparées par une détente intermédiaire et réinitialisation des paramètres opératoires.

Polymérisation d'un premier polymère (i) :

On introduit dans un autoclave de 3 litres, muni d'un agitateur, 108 mg de catalyseur. La température de polymérisation est amenée à 80 °C et est maintenue constante pendant la polymérisation. On y a ensuite introduit l'éthylène. La pression partielle d'éthylène est maintenue constante à une valeur de 5,8 bars. On introduit 6,7 g d'hexène puis 0,67 g chaque fois que l'on a produit 50 g de PE (pour maintenir un rapport Hexène/ Ethylène constant). Le rapport Hexène/Ethylène est de 0,11 . Après 68 minutes, l'autoclave a été dégazé jusqu'à une pression de 6 bars. 162 gr de polymère ont été obtenus (i).

Polymérisation d'un deuxième polymère (ii) :

On a ajouté 1 litre d'isobutane dans l'autoclave. La température a été amenée à 98 °C et on l'a maintenue constante durant le temps de la polymérisation. On a ensuite introduit une dose unique d'hydrogène pour obtenir un rapport molaire Hydrogène/Ethylène dans la phase liquide de 0,22. On a ensuite introduit le cocatalyseur (triéthylbore) dans l'autoclave dans une quantité telle que le rapport molaire triéthylbore/chrome soit de 3,8. La pression partielle d'éthylène a été maintenue constante à une valeur de 3.5 bars jusqu'à l'obtention d'une quantité supplémentaire de 162 g de polymère (ii). Après dégazage, on a recuelli de l'autoclave 324 g d'une composition des polymères (i) et (ii). Le catalyseur présentait une activité de 33000 et 93000 respectivement dans les blocs (i) et (ii). L'activité est exprimée en gPE/gcata.h.[C2H4]. Les propriétés du polymère, après granulation, sont les suivantes :

$MI_5 =$ 0.49
$\eta =$ 14 000
$T_G =$ 1,9
MVS = 954,4.

## Revendications

1. Polymère d'éthylène choisi parmi les homopolymères et les copolymères d'éthylène comprenant d'au plus 5 % en poids de comonomère présentant un taux de gonflement ($T_G$) d'au moins 1,4, une résistance à la fissuration sous contrainte (ESCR) d'au moins 55 h et un indice de fluidité ($MI_5$) d'au moins 0,2 g/10 min.

2. Polymère d'éthylène selon la revendication 1 présentant un indice de fluidité ($MI_5$) exprimé en g/10 min et une viscosité dynamique $\eta$ exprimée en dPa. s et mesurée à un gradient de vitesse de 100 $s^{-1}$ à 190°C répondant à la relation

$$\frac{\log (177470/MI_5) - \log \eta}{2 - \log (2,53 \times MI_5)} \geq 0,55.$$

3. Polymère d'éthylène selon la revendication 1 ou 2, présentant une masse volumique standard d'au moins 945 kg/m³.

4. Polymère d'éthylène selon la revendication 3 présentant une masse volumique standard de 952 à 958 kg/m³.

5. Polymère d'éthylène selon l'une quelconque des revendications 1 à 4 comprenant de 0,1 à 5 % en poids de comonomère choisi parmi le butène, l'hexène et leurs mélanges.

6. Procédé de préparation du polymère d'éthylène conforme à l'une quelconque des revendications 1 à 5, selon lequel on polymérise de l'éthylène éventuellement avec un ou plusieurs comonomères dans deux réacteurs en série, en présence d'un solide catalytique comprenant du titane et du zirconium dans un rapport molaire Zr/Ti d'au moins 2 et d'un cocatalyseur, le premier réacteur étant alimenté en éthylène, éventuellement en comonomère et/ ou en hydrogène, en solide catalytique et en cocatalyseur, le milieu réactionnel du premier réacteur étant transféré dans le deuxième réacteur, et le deuxième réacteur étant en outre alimenté en éthylène, éventuellement en comonomère et/ou en hydrogène.

**7.** Procédé selon la revendication 6, dans lequel le solide catalytique est constitué essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium.

**8.** Procédé de préparation du polymère d'éthylène conforme à l'une quelconque des revendications 1 à 5, selon lequel on polymérise de l'éthylène avec éventuellement un ou plusieurs comonomères dans deux réacteurs en série, en présence d'un premier solide catalytique contenant du titane à titre d'élément actif unique et d'un second solide catalytique contenant du titane et du zirconium à titre d'éléments actifs et d'un cocatalyseur, le premier réacteur étant alimenté en éthylène, éventuellement en comonomère et/ou en hydrogène, en premier et second solides catalytiques et en cocatalyseur, le milieu réactionnel du premier réacteur étant transféré dans le deuxième réacteur, et le deuxième réacteur étant en outre alimenté en éthylène, éventuellement en comonomère et/ou en hydrogène.

**9.** Procédé selon la revendication 8, dans lequel le premier solide catalytique est constitué essentiellement de 10 à 30 % en poids de titane, de 20 à 60 % en poids d'halogène, de 0,5 à 20 % en poids de magnésium et de 0,1 à 10 % en poids d'aluminium, et le second solide catalytique est constitué essentiellement de 0,5 à 10 % en poids de titane, de 5 à 40 % en poids de zirconium, de 20 à 80 % en poids d'halogène, de 1 à 30 % en poids de magnésium et de 0,5 à 10 % en poids d'aluminium.

**10.** Procédé selon l'une quelconque des revendications 6 à 9, dans lequel on utilise un solide catalytique qui est préparé en faisant réagir, dans une première étape, un composé oxygéné organique de magnésium avec un composé oxygéné organique de titane, et avec, le cas échéant, un composé oxygéné organique de zirconium jusqu'à l'obtention d'un complexe liquide, et en traitant ledit complexe liquide, dans une deuxième étape, au moyen d'un composé organoaluminique halogéné de formule générale $AlR_nX_{3-n}$ dans laquelle R est radical hydrocarboné, X est un halogène et n est inférieur à 3, pour précipiter le complexe liquide en un complexe catalytique solide.

**11.** Procédé de préparation du polymère d'éthylène conforme à l'une quelconque des revendications 1 à 5, selon lequel on polymérise de l'éthylène avec éventuellement un ou plusieurs comonomères dans un seul réacteur en présence d'un solide catalytique comprenant du chrome sur un support contenant au moins deux constituants choisis parmi la silice, l'alumine et le phosphate d'aluminium, éventuellement en présence d'un cocatalyseur et/ou d'hydrogène.

**12.** Procédé de préparation du polymère d'éthylène conforme à l'une quelconque des revendications 1 à 5, selon lequel on polymérise de l'éthylène avec éventuellement un ou plusieurs comonomères dans deux réacteurs disposés en série, en présence d'un solide catalytique comprenant du chrome sur un support contenant au moins deux constituants choisis parmi la silice, l'alumine et le phosphate d'aluminium, et d'un cocatalyseur, le premier réacteur étant alimenté en éthylène, éventuellement en comonomère et/ou en hydrogène, en solide catalytique, le milieu réactionnel du premier réacteur étant transféré dans le deuxième réacteur, le deuxième réacteur étant en outre alimenté en éthylène et éventuellement en comonomère et/ou en hydrogène, et le cocatalyseur étant présent dans au moins un des deux réacteurs.

**13.** Procédé selon la revendication 11 ou 12, dans lequel le solide catalytique comprend de 0,05 à 10 % en poids de chrome et le support contient la silice (X), l'alumine (Y) et le phosphate d'aluminium (Z) en un pourcentage molaire (X):(Y):(Z) de (10 à 95):(1 à 80):(1 à 85).

**14.** Procédé selon l'une quelconque des revendications 11 à 13, dans lequel le cocatalyseur est un trialkylbore, le radical alkyle comprenant jusqu'à 20 atomes de carbone.

**Patentansprüche**

**1.** Ethylenpolymer, das unter den Ethylenhomopolymeren und -copolymeren, die höchstens 5 Gew.-% Comonomer umfassen, ausgewählt ist, das einen Blähgrad (TG) von wenigstens 1,4, eine Reißfestigkeit unter Belastung (ESCR) von wenigstens 55 h und einen Fließindex ($MI_5$) von wenigstens 0,2 g/10 min aufweist.

**2.** Ethylenpolymer gemäß Anspruch 1, das einen Fließindex ($MI_5$), ausgedrückt in g/10 min, und eine dynamische Viskosität $\eta$, ausgedrückt in dPa·s und gemessen mit einem Geschwindigkeitsgradienten von 100 s$^{-1}$ bei 190 °C, aufweist, die der Beziehung

$$\frac{\log(177470/MI_5)-\log \eta}{2-\log(2,53 \times MI_5)} \geq 0{,}55.$$

gehorchen.

3. Ethylenpolymer gemäß Anspruch 1 oder 2, das eine Standarddichte von wenigstens 945 kg/m³ aufweist.

4. Ethylenpolymer gemäß Anspruch 3, das eine Standdichte von 952 bis 958 kg/m³ aufweist.

5. Ethylenpolymer gemäß einem der Ansprüche 1 bis 4, das 0,1 bis 5 Gew. % Comonomer, das unter Buten, Hexen und deren Gemischen ausgewählt ist, umfaßt.

6. Verfahren zur Herstellung des Ethylenpolymers gemäß einem der Ansprüche 1 bis 5, gemäß dem man Ethylen gegebenenfalls mit einem oder mehreren Comonomeren in zwei Reaktoren in Reihe in Gegenwart eines katalytischen Feststoffs, der Titan und Zirkonium in einem Molverhältnis Zr/Ti von wenigstens 2 umfaßt, und eines Cokatalysators polymerisiert, wobei der erste Reaktor mit Ethylen, gegebenenfalls mit Comonomer und/oder mit Wasserstoff, mit katalytischem Feststoff und mit Cokatalysator gespeist wird, das Reaktionsmedium des ersten Reaktors in den zweiten Reaktor überführt wird und der zweite Reaktor außerdem mit Ethylen, gegebenenfalls mit Comonomer und/oder mit Wasserstoff gespeist wird.

7. Verfahren gemäß Anspruch 6, bei dem der katalytische Feststoff im wesentlichen aus 0,5 bis 10 Gew.-% Titan, 5 bis 40 Gew.-% Zirkonium, 20 bis 80 Gew.-% Halogen, 1 bis 30 Gew.-% Magnesium und 0,5 bis 10 Gew.-% Aluminium besteht.

8. Verfahren zur Herstellung des Ethylenpolymers gemäß einem der Ansprüche 1 bis 5, gemäß dem man Ethylen gegebenenfalls mit einem oder mehreren Comonomeren in zwei Reaktoren in Reihe in Gegenwart eines ersten katalytischen Feststoffs, der Titan als einziges aktives Element enthält, und eines zweiten katalytischen Feststoffs, der Titan und Zirkonium als aktive Elemente enthält, und eines Cokatalysators polymerisiert, wobei der erste Reaktor mit Ethylen, gegebenenfalls mit Comonomer und/oder mit Wasserstoff, mit erstem und zweitem katalytischem Feststoff und mit Cokatalysator gespeist wird, das Reaktionsmedium des ersten Reaktors in den zweiten Reaktor überführt wird und der zweite Reaktor außerdem mit Ethylen, gegebenenfalls mit Comonomer und/oder mit Wasserstoff gespeist wird.

9. Verfahren gemäß Anspruch 8, bei dem der erste katalytische Feststoff im wesentlichen aus 10 bis 30 Gew.-% Titan, 20 bis 60 Gew.-% Halogen, 0,5 bis 20 Gew.-% Magnesium und 0,1 bis 10 Gew.-% Aluminium besteht und der zweite katalytische Feststoff im wesentlichen aus 0,5 bis 10 Gew.-% Titan, 5 bis 40 Gew.-% Zirkonium, 20 bis 80 Gew.-% Halogen, 1 bis 30 Gew.-% Magnesium und 0,5 bis 10 Gew.-% Aluminium besteht.

10. Verfahren gemäß einem der Ansprüche 6 bis 9, bei dem man einen katalytischen Feststoff verwendet, der hergestellt wird, indem man in einem ersten Schritt eine organische sauerstoffhaltige Magnesiumverbindung mit einer organischen sauerstoffhaltigen Titanverbindung und gegebenenfalls mit einer organischen sauerstoffhaltigen Zirkoniumverbindung bis zum Erhalt eines flüssigen Komplexes umsetzt und indem man besagten flüssigen Komplex in einem zweiten Schritt mittels einer halogenhaltigen aluminiumorganischen Verbindung der allgemeinen Formel $AlR_nX_{3-n}$, in der R ein Kohlenwasserstoffrest ist, X ein Halogen ist und n kleiner 3 ist, behandelt, um den flüssigen Komplex als festen katalytischen Komplex auszufällen.

11. Verfahren zur Herstellung des Ethylenpolymers gemäß einem der Ansprüche 1 bis 5, gemäß dem man Ethylen gegebenenfalls mit einem oder mehreren Comonomeren in einem einzigen Reaktor in Gegenwart eines katalytischen Feststoffs, der Chrom auf einem Träger, der wenigstens zwei unter Siliciumdioxid, Aluminiumoxid und Aluminiumphosphat ausgewählte Bestandteile enthält, umfaßt, gegebenenfalls in Gegenwart eines Cokatalysators und/oder Wasserstoff polymerisiert.

12. Verfahren zur Herstellung des Ethylenpolymers gemäß einem der Ansprüche 1 bis 5, gemäß dem man Ethylen gegebenenfalls mit einem oder mehreren Comonomeren in zwei Reaktoren, die in Reihe angeordnet sind, in Gegenwart eines katalytischen Feststoffs, der Chrom auf einem Träger, der wenigstens zwei unter Siliciumdioxid, Aluminiumoxid und Aluminiumphosphat ausgewählte Bestandteile enthält, umfaßt, und eines Cokatalysators polymerisiert, wobei der erste Reaktor mit Ethylen, gegebenenfalls mit Comonomer und/oder mit Wasserstoff, mit katalytischem Feststoff gespeist wird, das Reaktionsmedium des ersten Reaktors in den zweiten Reaktor überführt wird, der zweite Reaktor außerdem mit Ethylen und gegebenenfalls mit Comonomer und/oder mit Wasserstoff gespeist wird und der Cokatalysator in wenigstens einem der beiden Reaktoren vorhanden ist.

13. Verfahren gemäß Anspruch 11 oder 12, bei dem der katalytische Feststoff 0,05 bis 10 Gew.-% Chrom umfaßt und der Träger Siliciumdioxid (X), Aluminiumoxid (Y) und Aluminiumphosphat (Z) in einem Molprozentsatz (X):(Y):(Z) von (10 bis 95):(1 bis 80):(1 bis 85) enthält.

14. Verfahren gemäß einem der Ansprüche 11 bis 13, bei dem der Cokatalysator ein Trialkylboran ist, wobei der Alkylrest bis zu 20 Kohlenstoffatome umfaßt.

## Claims

1. Ethylene polymer chosen from ethylene homopolymers and copolymers containing not more than 5 % by weight of comonomer having a blow-up ratio ($R_B$) of at least 1.4, a resistance to crazing under stress (ESCR) of at least 55 h and a melt index ($MI_5$) of at least 0.2 g/10 min.

2. Ethylene polymer according to Claim 1, having a melt index ($MI_5$), expressed in g/10 min, and a dynamic viscosity $\eta$, expressed in dPA s and measured at a rate gradient of 100 $s^{-1}$ at 190°C, corresponding to the relationship

$$\frac{\log (177470/MI_5) - \log \eta}{2 - \log (2.53 \times MI_5)} \geq 0.55.$$

3. Ethylene polymer according to Claim 1 or 2, having a standard density of at least 945 $kg/m^3$.

4. Ethylene polymer according to Claim 3, having a standard density of 952 to 958 $kg/m^3$.

5. Ethylene polymer according to any one of Claims 1 to 4, comprising from 0.1 to 5% by weight of comonomer chosen from butene, hexene and mixtures thereof.

6. Process for the preparation of the ethylene polymer in accordance with any one of Claims 1 to 5, according to which ethylene is optionally polymerized with one or more co-monomers in two reactors in series in the presence of a catalytic solid comprising titanium and zirconium in a Zr/Ti molar ratio of at least 2, and in the presence of a co-catalyst, the first reactor being fed with ethylene, optionally with co-monomer and/or with hydrogen, with catalytic solid and with co-catalyst, the reaction medium of the first reactor being transferred into the second reactor, and the second reactor also being fed with ethylene, optionally with co-monomer and/or with hydrogen.

7. Process according to Claim 6, in which the catalytic solid consists essentially of from 0.5 to 10 % by weight of titanium, from 5 to 40 % by weight of zirconium, from 20 to 80 % by weight of halogen, from 1 to 30 % by weight of magnesium and from 0.5 to 10 % by weight of aluminium.

8. Process for the preparation of the ethylene polymer in accordance with any one of Claims 1 to 5, according to which ethylene is polymerized with optionally one or more co-monomers in two reactors in series, in the presence of a first catalytic solid containing titanium as sole active element and a second catalytic solid containing titanium and zirconium as active elements and a co-catalyst, the first reactor being fed with ethylene, optionally with co-monomer and/or with hydrogen, with first and second catalytic solids and with co-catalyst, the reaction medium of the first reactor being transferred into the second reactor, and the second reactor also being fed with ethylene and optionally with co-monomer and/or with hydrogen.

9. Process according to Claim 8, in which the first catalytic solid consists essentially of from 10 to 30 % by weight of titanium, from 20 to 60 % by weight of halogen, from 0.5 to 20 % by weight of magnesium and from 0.1 to 10 % by weight of aluminium, and the second catalytic solid consists essentially of from 0.5 to 10 % by weight of titanium, from 5 to 40 % by weight of zirconium, from 20 to 80 % by weight of halogen, from 1 to 30 % by weight of magnesium and from 0.5 to 10 % by weight of aluminium.

10. Process according to any one of Claims 6 to 9, in which a catalytic solid is used which is prepared by reacting, in a first step, an oxygen-containing organomagnesium compound with an oxygen-containing organotitanium compound, and with, where appropriate, an oxygen-containing organozirconium compound until a liquid complex is obtained, and by treating the said liquid complex, in a second step, by means of a halogenated organoaluminium compound of general formula $AlR_nX_{3-n}$ in which R is a hydrocarbon radical, X is a halogen and n is less than 3, in order to precipitate the liquid complex as a catalytic solid complex.

11. Process for the preparation of the ethylene polymer in accordance with any one of Claims 1 to 5, according to which ethylene is polymerized with optionally one or more co-monomers in a single reactor, in the presence of a catalytic solid comprising chromium on a support containing at least two constituents chosen from silica, alumina and aluminium phosphate, optionally in the presence of a co-catalyst and/or of hydrogen.

12. Process for the preparation of the ethylene polymer in accordance with any one of Claims 1 to 5, according to which ethylene is polymerized with optionally one or more co-monomers in two reactors arranged in series, in the presence of a catalytic solid comprising chromium on a support containing at least two constituents chosen from silica, alumina and aluminium phosphate, and a co-catalyst, the first reactor being fed with ethylene, optionally with co-monomer and/or with hydrogen, and with a catalytic solid, the reaction medium of the first reactor being transferred into the second reactor, the second reactor also being fed with ethylene and optionally with co-monomer and/or with hydrogen, and the co-catalyst being present in at least one of the two reactors.

13. Process according to Claim 11 or 12, in which the catalytic solid comprises from 0.05 to 10 % by weight of chromium and the support contains silica (X), alumina (Y) and aluminium phosphate (Z) in an (X):(Y):(Z) molar percentage of (10 to 95):(1 to 80):(1 to 85).

14. Process according to any one of Claims 11 to 13, in which the co-catalyst is a trialkylboron, the alkyl radical comprising up to 20 carbon atoms.